# EUROPEAN PATENT APPLICATION

(11) **EP 3 319 238 A1**
(43) Date of publication of application: **09.05.2018**
(21) Application number: 16197826.7
(22) Date of filing: 08.11.2016
(51) Int. Cl.: H04B 3/46, H01R 39/58

(54) **SLIP RING WITH SELECTIVE WEAR INDICATION**

(71) Applicant: Schleifring GmbH, 82256 Fürstenfeldbruck (DE)
(72) Inventor: Holzapfel, Christian, 82256 Fürstenfeldbruck (DE); HÄFFNER, Holger, 86830 Schwabmünchen (DE)
(74) Representative: Lohr, Georg

(57) **Abstract**

A slip ring unit comprises a brush block with multiple brushes rotatable against a module with multiple sliding tracks. An angular encoder is connected to the brush block and the module for detecting the relative position in between. An evaluation unit receives signals from the position encoder and generates a position dependent wear indicating signal thereof. It has multiple wear counters dedicated to multiple positions and/or sections. If a movement is detected within a certain section, the related wear counter is incremented. This allows to monitor wear at slip rings which are not continuously rotating.

## Description

### Field of the invention

The invention relates to slip rings for transmission of electrical signals between rotating parts.

### Description of the related art

Electrical slip rings are used to transfer electrical power and/or signals between a rotating and a stationary part. Such devices are used in different applications, like wind energy plants or computer tomography scanners. There are also many defense and aerospace applications.

In a slip ring, the electrical contact is established between a cylindrical drum having sliding tracks arranged in an axial direction or a disk having sliding tracks with different diameters arranged radially, and a brush. A brush may generally comprise a contacting wire or a plurality of contacting wires.

It is common to all of these applications, that a high lifetime and a low contact resistance as well as a low contact noise are required. Due to the mechanical friction between the brush and the sliding track, there is wear which causes the slip ring to degrade over time.

From prior art, wear indicators are known which determine the length of a carbon brush and therefore indicate the wear of the brush. In most slip rings the sliding tracks have significantly longer lifetimes than the brushes, but they are also susceptible to wear. In WO 2002/03403 A2 a slip ring diagnosis system is disclosed. It determines the wear status by measuring electrical parameters like contact resistance or contact noise.

The kind and distribution of wear of tracks may vary between applications. A slip ring track at a continuously rotating device like a radar antenna has an evenly distributed wear over the whole length of the track. If a slip ring is used in a discontinuously operating device like an industrial robot, some sections of the sliding track may show more wear than other sections. This makes a wear indication comparatively difficult und unreliable.

### Summary of the invention

The problem to be solved by the invention is to provide a reliable wear indication which is able to indicate wear of a sliding track.

Solutions of the problem are described in the independent claims. The dependent claims relate to further improvements of the invention.

In a preferred embodiment, a slip ring unit comprises at least one sliding track and at least one brush sliding on the track, arranged movable and/or rotatable against the track. Furthermore, an encoder is provided for detecting relative position and/or movement between the at least one sliding track and the at least one brush. The encoder is mechanically coupled to the at least one sliding track and to the at least one brush.

The encoder may be a position or angular encoder. It may be based on optical, magnetic, mechanical or any other suitable encoder technology. The encoder may have a sensor which is movable against a marker section. The marker section preferably comprises a plurality of markers, which can be detected by the sensor. Preferably, the sensor is mechanically connected to the at least one brush, whereas the marker section is mechanically connected to the at least one sliding track. A very compact design may result in mounting the sensor to a brush block holding a plurality of brushes. The sensor and the marker section may also be exchanged, such that the sensor is mechanically connected to the sliding track and the marker section to the brushes. The encoder may also be a single part component, for example like angular encoders having a housing and a driveshaft. The encoder may also be part of a motor encoder driving a complex device comprising a slip ring. The encoder preferably is directly connected to the slip ring, but it may also be indirectly connected, for example by means of a gearbox. The term mechanically connected has the meaning of fixed or fixedly connected, such that there are only slight movements for compensation of mechanical tolerances. It is no rotatable or slidable connection. The connection may be a direct or an indirect connection, such as the brush and the encoder are mounted to the same printed circuit board.

The encoder may be an absolute or relative encoder or any other means for obtaining slipring position data. In the case of a relative encoder, there must be at least one absolute position reference. Such a reference may be a different or additional marker. Alternatively, an absolute position reference may be given by a mechanical stop, which is mechanically limiting the range of movement.

Furthermore, an evaluation unit is provided. The evaluation unit is configured to receive signals from the position encoder and to generate a position dependent wear indication signal thereof. The wear indication signal may be a single digital signal indicating a failure condition. There may be multiple signals indicating multiple stages of wear. There may also be an analog signal providing a value indicating the amount of wear. Furthermore, a bus may be provided for delivering detailed wear information. This bus may also be used to configure the evaluation unit. It is preferred, if the evaluation unit is configured to receive a reset signal, for example when the sliding tracks or brushes have undergone some maintenance or have been exchanged. Such a reset signal may be received via a bus, by a signal line, by a switch, which may also be a magnetic triggered switch or any other suitable means. The wear indication signal may also be a value in a memory or any other signal.

The evaluation unit preferably is configured for selectively recording the presence and/or movement of a brush or of multiple brushes over a certain position of a sliding track. The evaluation unit may also be configured for selectively recording the presence and/or movement between the rotating and/or movable sections in general. The latter is simpler to perform and requires lower resources on memory and computational power.

Preferably, the evaluation unit is configured to receive the encoder signal and to generate a position value thereof. In the simplest case, the position value is the same as the encoder signal. It may also be necessary to scale and/or calibrate the encoder signal. It may be multiplied or divided by a certain factor, also a position offset may be added and/or subtracted. If the position value does not change, there is obviously no movement of the brush against the track. If the position value changes, a movement is detected. Generally, such a movement generates wear.

The evaluation unit may comprise a microcontroller, a FPGA, a desktop computer, an industrial control or any other suitable device having a data storage or storage medium comprising software for performing the evaluation tasks. It may be integrated into a slipring unit housing, or it may be contained in a discrete housing separated from the slipring unit. It may also be part of control unit of a larger system, e.g. a manufacturing machine, comprising the slipring unit.

In a preferred embodiment, there are multiple wear counters dedicated to multiple positions and/or sections. For example, a full rotation comprising 360° may be divided into 36 sections, each section covering 10°. It is preferred to have a higher resolution like 1° or 0,1°. If movement is detected in a certain section, the wear counter of this section may be increased. There may be independent wear counters for either direction of movement. In a further embodiment the speed of movement may be detected, for example by evaluating the time between changing position values. The wear counter may be increased dependent on speed. There may be a linear or exponential increase with speed, such that for example with a low speed the wear counter is increased for 1 and with twice the speed, the wear counter is increased for 2. Additionally, the wear counter may be incremented depending on the maximum acceleration or deceleration that is applied on the brush when traveling through the counter ressembling the section. In addition to acceleration (derivation of speed) also the derivation of the acceleration may have influence on the wear counter to resemble the actual brush wear of the slipring.

In another embodiment, there is at least one auxiliary sensor for detecting and/or measuring at least one operational value like temperature, humidity, acceleration etc. Also electrical values like a voltage across the slip ring or a current through the slip ring may be measured. It is known, that electrical load also influences wear and therefore may be considered by the wear counter. The measured values may further influence the wear counter values. In an example at standard temperature wear counter increasing of 1 would change to a value of 2 at a 10° higher temperature, a change to a value of 4 at a 20° higher temperature and so on.

If multiple brushes are used in a slip ring, the corresponding wear counters assigned to the sections where the brushes are located, may be increased. If for example 3 brushes are provided, each spaced 120° apart from the next brush, the wear counters of 3 sections, spaced 120° apart and corresponding to the brushes may be increased. Separate wear counters may be implemented for different application of the tracks, e.g. one for signal and one for power transmission per different module diameter, per different brush configurations e.g. one for single wire brushes one for multiple wire brushes, per different contacting technology e.g. one for metal graphite brushes one for gold wire brushes in the same slipring.

As described above, the wear counters may increase differently at different sections according to the relative wear in these sections. If at least one wear counter approaches and/or reaches a limit value, a wear indication signal may be given. Also a wear warning signal may be issued, for example, if at least one counter is increasing rapidly. Such a wear warning signal may be indicated as an optical signal, for example by a LED. It may also be an electrical analog or digital signal.

The evaluation unit may have a backup battery, which may also allow operation when no power is supplied to the evaluation unit. It may also have a non-volatile memory for storing longtime values. There may also be a battery check circuit for monitoring the status of the battery.

A further aspect of the invention relates to a wear indication in industrial robots. Here, the encoder may be a part of the robot. It may be integrated into an arm or any other part. The evaluation unit may also be a part of the robot, like the motion control computer. Here, the evaluation may be made by software.

Another aspect relates to a method of wear evaluation of a slipring comprising at least one brush rotatable against at least one sliding track. The method comprises the steps of:
receiving signals from an encoder for detecting the relative position between the at least one brush and
generating a position dependent wear indicating signal thereof.

Furthermore, multiple wear counters may be assigned to multiple positions and/or sections of the slip ring.

Also, a wear counter may be incremented, if at the associated position a change of position has been detected.

The above method may be combined with any other feature described herein.

### Description of Drawings

In the following the invention will be described by way of example, without limitation of the general inventive concept, on examples of embodiment with reference to the drawings.
Figure 1 shows a preferred embodiment in a sectional front view.
Figure 2 shows a side view.
Figure 3 shows a wear counter diagram.
Figure 4 shows a weighted wear counter diagram

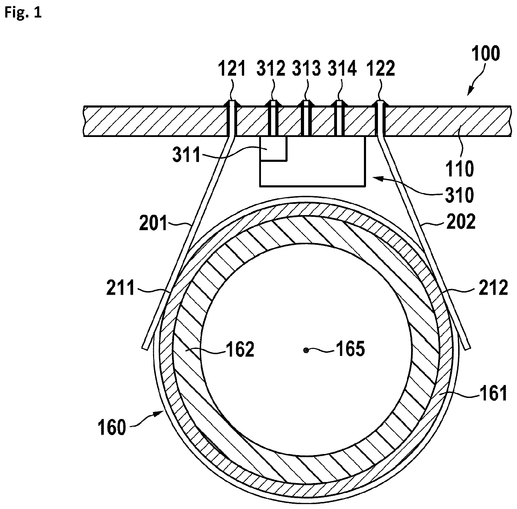

In Figure 1 a preferred embodiment is shown. An exemplary slip ring unit comprises a cylindrical slip ring module 160 having at least one sliding track 161 of a conductive material like a metal, which is supported by an insulating body 162, preferably of a plastic material. The module is rotatable about a center axis 165. There may be a preferably stationary brush block 100 comprising an insulating body 110 holding at least one contact wire 201, 202. The contact wires may be soldered by soldering connections 121, 122 into through-holes of the insulating body 110. The contact wires have a contact area 211, 212 at which they contact the module 160. It is understood, that any other type of slip ring, track or brush may be used in this embodiment. A sensor unit 310, preferably being part of an encoder, further comprises an evaluation unit 311 which may provide a signal to the wear signal output 312. In this space-saving embodiment, both units are in the same housing. Obviously they may also be contained in separate housings. There may be a first and the second power contact 313, 314 to provide operational power to the sensor unit. Typically this may be a low voltage in the range between 5 and 24 Volts and a low power of a few watts.

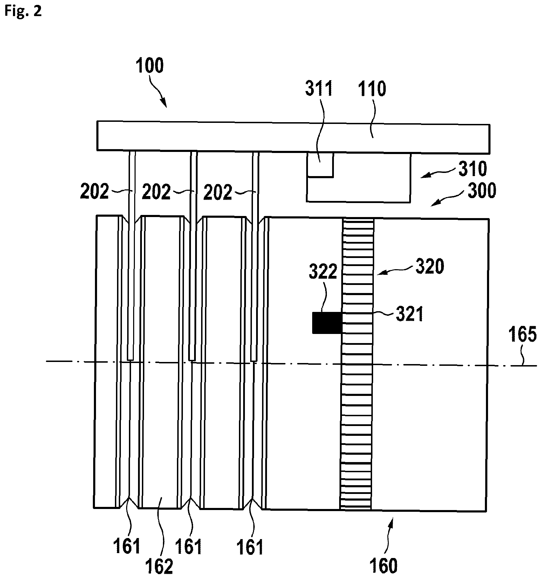

In Figure 2, the exemplary slip ring unit is shown in a side view. The cylindrical module shows sliding tracks 161 spaced apart by insulating body 162. The sliding tracks 161 have V-shaped grooves for guiding the contact wires. In this Figure, three sliding tracks 161 isolated from each other are shown together with corresponding brushes 202, which are also isolated from each other, thus allowing simultaneous transfer of three signals or three current paths over the slip ring.

Furthermore, a position encoder 300 is shown. The position encoder comprises a sensor unit 310 including an evaluation unit 311. It further comprises a marker section 320, further comprising a plurality of first markers 321 and at least one optional second marker 322. Preferably, the first markers are spaced equally and may give a relative reference, whereas the at least one second marker may give an absolute reference. The markers may be detected by the sensor unit by an optical, a magnetic or any other suitable sensor. The evaluation unit 311 preferably contains a digital logic and/or a microcontroller. It is configured to generate a wear indication signal from the position encoder signals. It preferably has multiple wear counters assigned to angular sections related to relative angles between the brush block and the module. Preferably a wear counter is increased, if a position change is indicated in its assigned angular section.

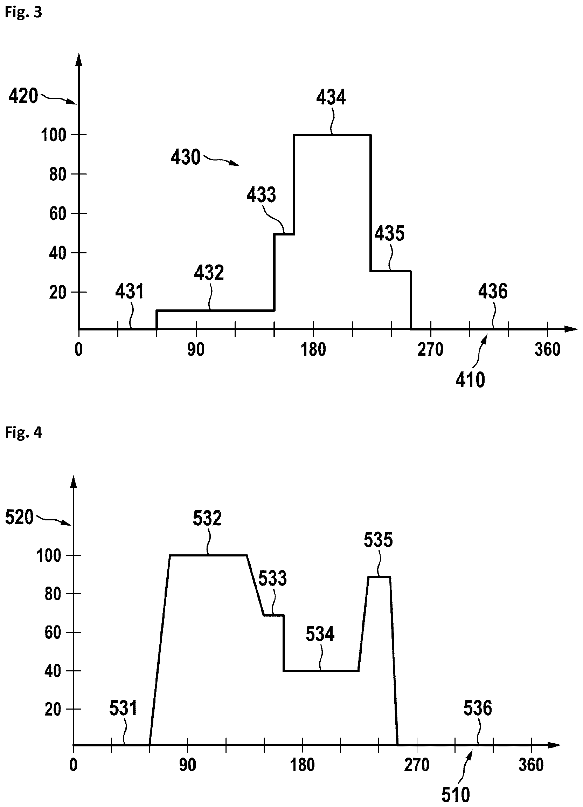

Figure 3 shows a wear counter diagram. To the right, there is an angular axis 410 indicating relative angles of 0° to 360°. The counter value axis 420 to the top indicates counter value in thousands from zero to 100,000. The curve shows the counted values depending on relative angles of the slip ring which may be used in an industrial robot. Such industrial robot has angular operating ranges which are not usable, for example due to mechanical limits. These ranges correspond to counter curve sections 431 and 436 of counter curve 430, where the counter value is at or close to zero. There may be a secondary operating ranges, for example when moving the robot from an idle position to a primary operating position. Such a range is indicated by curve section 432, the only a low number of counts are detected. In the primary operating range 433, 434 and 435 a significantly higher number of counts is shown. It is obvious, that the highest number of counts in section 434 is the most limiting factor of lifetime of the slip ring.

Figure 4 shows a weighted wear counter diagram. This diagram is based on the previous diagram, but additional weight is given to the speed of rotation. To the right, there is an angular axis 510 indicating relative angles of 0° to 360°. The counter value axis 520 to the top indicates counter value in thousands from zero to 100,000. As in this example, the robot is moved with the highest possible speed through the second operating range, the wear counter gets additional weight due to the high speed and reaches the highest value 532 of weighted counter curve 530. In the primary operating sections high accuracy is required and therefore the operating speed is lower, resulting in a lower weight as shown in sections 533, 534 and 535. Again, there are very low counter values in the unused sections 531 and 536.

### List of reference numerals

- 100: brush block
- 110: insulating body
- 121: soldering connection
- 122: soldering connection
- 160: slip ring module
- 161: sliding track
- 162: insulating body
- 165: center axis
- 201: contact wire
- 202: contact wire
- 211: contact area
- 212: contact area
- 300: encoder
- 310: sensor unit
- 311: evaluation unit
- 312: wear signal output
- 313, 314: power contacts
- 320: marker section
- 321: first markers
- 322: second marker
- 410: angular axis
- 420: counter axis
- 430: counter curve
- 431 - 436: counter curve sections
- 510: angular axis
- 520: counter axis
- 530: weighted counter curve
- 531 - 536: weighted counter curve sections

## Claims

1. A slip ring unit comprising at least one brush (201) rotatable against at least one sliding track (161), an encoder (300) and an evaluation unit (311),
the encoder detecting the relative position between the at least one brush (201) and the at least one sliding track (161), and
the evaluation unit (311) being configured to receive signals from the position encoder and to generate a position dependent wear indicating signal thereof.

2. The slip ring unit according to claim 1,
**characterized in, that**
the evaluation unit (311) has multiple wear counters dedicated to multiple positions and/or sections.

3. The slip ring unit according to claim 2,
**characterized in, that**
the evaluation unit (311) is configured to detect a movement if the sensor value changes.

4. The slip ring unit according to any one of claims 2 to 3,
**characterized in, that**
the evaluation unit (311) is configured to increment a wear counter if at the associated position a movement has been detected.

5. The slip ring unit according to any one of claims 2 to 4,
**characterized in, that**
the evaluation unit (311) is configured to increase the increment of a wear counter dependent on the speed of movement and/or acceleration or deceleration of movement.

6. The slip ring unit according to any one of claims 2 to 5,
**characterized in, that**
the slip ring unit comprises at least one further auxiliary sensor for measuring of at least one operational value and the evaluation unit (311) is configured to increase the increment of a wear counter dependent on at least one of the sensor values, wherein
the sensor values may correspond to at least one of temperature, humidity, acceleration, voltage or current at the slip ring.

7. The slip ring unit according to any one of the preceding claims,
**characterized in, that**
the encoder comprises a sensor unit (310) and at least one marker section (320) movable relative to the sensor unit.

8. The slip ring unit according to any one of the preceding claims,
**characterized in, that**
the encoder is mechanically connected to the at least one brush (201) and the at least one sliding track (161).

9. The slip ring unit according to any one of the preceding claims,
**characterized in, that**
the sensor unit (310) is mechanically fixed to a brush block (100) holding the at least one brush (201) and the at least one marker section (320) is fixed to a slip ring module (160) holding the at least one marker section (320).

10. The slip ring unit according to any one of the preceding claims,
**characterized in, that**
the encoder it is a single part component having a driveshaft and a housing.

11. The slip ring unit according to any one of the preceding claims,
**characterized in, that**
the slip ring and the encoder are part of an industrial robot.

12. The slip ring unit according to any one of the preceding claims,
**characterized in, that**
the evaluation unit (311) may comprise a microcontroller or microprocessor further comprising a memory holding a software for performing evaluation tasks and/or the evaluation unit (311) may be arranged distant from the at least one brush (201) and the at least one sliding track (161).

13. Method of wear evaluation of a slip ring comprising at least one brush (201) rotatable against at least one sliding track (161) further comprising the steps of
- receiving signals from an encoder (300) for detecting the relative position between the at least one brush (201) and
- generating a position dependent wear indicating signal thereof.

14. The method according to claim 13, further comprising the steps of assigning multiple wear counters to multiple positions and/or sections of the slip ring.

15. The method according to claim 13 or 14, further comprising the steps of incrementing a wear counter if at the associated position a change of position has been detected.
